# EUROPÄISCHE PATENTANMELDUNG

(11) **EP 3 819 123 A1**
(43) Veröffentlichungstag der Anmeldung: **12.05.2021**
(21) Anmeldenummer: 20205812.9
(22) Anmeldetag: 05.11.2020
(51) Int. Cl.: B32B 27/10, B32B 1/02, B32B 27/08, B32B 27/30, B32B 27/32, B32B 29/00, B65D 65/40

(54) **VERFAHREN ZUR HERSTELLUNG MEHRSCHICHTIGER VERPACKUNGSFOLIEN, SOLCHE VERPACKUNGSFOLIEN UND PRODUKTVERPACKUNGEN DIESE AUFWEISEND**

(30) Priorität: 05.11.2019 DE 102019129712
(71) Anmelder: Wihuri Packaging OY, 00570 Helsinki (FI)
(72) Erfinder: JOHANNMEYER, Tim, 27374 Visselhövede (DE); KOWALSKI, Tobias, 29664 Walsrode (DE); BARTELS, Guido, 29664 Walsrode (DE); SPERLICH, Bernd, 29664 Walsrode (DE)
(74) Vertreter: Gramm, Lins & Partner Patent- und Rechtsanwälte PartGmbB

(57) **Zusammenfassung**

Die vorliegende Erfindung betrifft ein Verfahren zur Herstellung mehrschichtiger Verpackungsfolien umfassend eine Papierschicht und eine mehrlagige Heißsiegelschicht. Weiterhin wird eine entsprechende mehrschichtige Verpackungsfolie bereitgestellt, diese Folie ist insbesondere zum Recycling der Folienmaterialien insbesondere zur Trennung dieser Bestandteile. Weiterhin wird ein Verfahren zur Herstellung von Produktverpackungen die erfindungsgemäßen mehrschichtigen Verpackungsfolien aufweisend bereitgestellt sowie Produktverpackungen mit entsprechender Verpackungsfolie.

## Beschreibung

Die vorliegende Erfindung betrifft ein Verfahren zur Herstellung mehrschichtiger Verpackungsfolien umfassend eine Papierschicht und eine mehrlagige Heißsiegelschicht. Weiterhin wird eine entsprechende mehrschichtige Verpackungsfolie bereitgestellt, diese Folie ist insbesondere zum Recycling der Folienmaterialien und insbesondere zur Trennung dieser Bestandteile. Weiterhin wird ein Verfahren zur Herstellung von Produktverpackungen die erfindungsgemäßen mehrschichtigen Verpackungsfolien aufweisend bereitgestellt sowie Produktverpackungen mit entsprechender Verpackungsfolie.

### Stand der Technik

Ein- oder mehrteilig ausgebildete Verpackungen finden vielfältigen Einsatz im täglichen Leben. Insbesondere zum Verpacken von Lebensmitteln finden ein- oder mehrteilige Verpackungen, zum Beispiel Einschlagverpackungen oder Verpackungen aus einem Deckel und einem Behälter, wie eine Verpackungsmulde, Verwendung. Typischerweise sind solche Verpackungen zum einmaligen Gebrauch geeignet, wobei tatsächlich durch Wiederverschließbarkeit, die auf unterschiedliche Anordnungen beruhen kann, eine mehrmalige Entnahme des verpackten Produktes oder des verpackten Gutes möglich ist. Nach Gebrauch werden diese Verpackungen in den Müll zur Entsorgung gegeben.

Solche Verpackungen sind meist aus Kunststoffen aufgebaut. Darüber hinaus finden sich im Handel vielfach Produkte aus Mehrschichtfolien, die neben einem Kunststoffanteil auch einen Papieranteil aufweisen. Solche Kartonverbunde finden vielfältige Anwendung zum Verpacken von Lebensmitteln zum Beispiel von Fleisch aber auch anderen Produkten.

Nachteilig bei Kunststoffverpackungen ist, dass die zum Einsatz kommenden Kunststoffe fast ausschließlich aus fossilen Rohstoffen und nicht auf nachwachsenden Rohstoffen basieren. Entsprechend werden immer häufiger Kartonverbunde eingesetzt, um die Verwendung von Kunststoff möglichst gering zu halten und so die Rohstoffbilanz zugunsten nachwachsender Rohstoffe zu verbessern.

So werden zum Beispiel in der EP 2 520 429 A1 mehrschichtige Verpackungsfolien und daraus hergestellte Verpackungen beschrieben, die einen Papieranteil aufweisen.

Die EP 3 124 235 A1 beschreibt ein mehrschichtiges Folienmaterial mit EVOH umfassend eine Trägerschicht, wie Papier in Verbindung mit einer mehrschichtigen Kunststoffschicht.

Aus der WO 92/04187 ist eine Abdeckung für eine Nahrungsmittelproduktverpackung und ein Verfahren zur Herstellung dieser Abdeckung bekannt.

Die US 2009/0286090 A1 beschreibt Filme unter Verwendung von funktionalen Polymerbeschichtungen.

Aus der DE 10 2014 003 886 A1 sind funktionalisierte Wellpappen bekannt, wobei bei dieser Wellpappe das Papier auf den Wellenbergen bzw. Wellentälern mit der Kunststofffolie versiegelt wird. Das Dokument betrifft Wellpappe, die keine Folie darstellt, bei der die Kunststofffolie punktuell auf entsprechende Bereiche der Wellpappe verklebt wird, üblicherweise mit Klebern auf Basis von Mais, Weizen oder Kartoffelstärke.

Allerdings steigt die Anforderung zur Recyclefähigkeit von Wertstoffen und zur Verringerung von Müll insbesondere bei Einmalverpackungen stetig. Ein Problem bei der Verwendung von Kartonverbundverpackungen aus Papier und Kunststoff als Wertstoffe ist die Trennung der verwendeten Kunststofffolien vom Papier nach Gebrauch. Die sich auf dem Markt befindenden Kartonverbundverpackungen erlauben eine Trennung des Kunststoffanteils vom Papieranteil nicht oder nur derart, dass viele Papieranteile, also Zellulosefasern, an dem Kunststoff haften bleiben. Eine im Wesentlichen sortenreine Trennung ist nicht möglich.

Verfahren zur Herstellung solcher mehrschichtigen Verpackungsfolien mit flächiger Kaschierung der Kunststofffolien auf der Papierschicht sind bekannt. Diese Herstellungstechniken können grob in Extrusionskaschierung und Klebstoffkaschierung oder Heißkaschierung gegliedert werden. Die Klebstoffkaschierung oder Heißkaschierung ergibt meist eine sehr feste Kaschierung zwischen den entsprechenden Schichten. Die Extrusionskaschierung ist ebenfalls eine, wo der verbindende Klebstoff als Schmelze heiß aufgebracht wird. Die gekühlte Kaschierwalze verbindet dann unter Druck die entsprechenden Schichten. Extrusionskaschierungen zeichnen sich dadurch aus, dass die Kaschierwalzen gekühlt werden, um den heiß aufgebrachten Haftvermittler beziehungsweise Klebstoff zu kühlen.

Die Aufgabe der folgenden Erfindung liegt darin, mehrschichtige Verpackungsfolien umfassend eine Papierschicht und eine Kunststoffschicht insbesondere mit flächiger Kaschierung dieser Schicht bereit zu stellen, bei denen nach Verwendung die Trennung des Kunststoffs vom Papier einfach möglich ist, um so den hohen Anforderungen des Gesetzgebers und des Verbrauchers an die Trennung der Wertstoffe zu genügen.

### Kurze Beschreibung der Erfindung

Die vorliegende Erfindung richtet sich auf ein Verfahren zur Herstellung einer mehrschichtigen Verpackungsfolie, umfassend
a) Bereitstellen einer Papierschicht als eine Oberfläche der mehrschichtigen Verpackungsfolie und
b) Bereitstellen einer mehrlagigen Heißsiegelschicht mit einer auf einer Oberflächenseite vorliegenden Kaschierschicht;
c) Thermokaschieren der Papierschicht und der mehrlagigen Heißsiegelschicht, wobei die Kaschierschicht der mehrlagigen Heißsiegelschicht auf der Oberfläche der Papierschicht, die der äußeren Oberfläche der Papierschicht der mehrlagigen Verpackungsfolie gegenüberliegt, angeordnet wird und anschließend die Schichten unter Druck und Erwärmung flächig kaschiert werden, wobei die Kaschierschicht der mehrlagigen Heißsiegelschicht eine ist aus modifizierten Polyethylen und/oder modifiziertem Polyolefin oder aus Polyolefin Copolymer.

In einer Ausführungsform ist dabei mindestens eine der Kaschierwalzen erwärmt.

In einem weiteren Aspekt wird eine mehrschichtige Verpackungsfolie bereitgestellt, die insbesondere erhältlich ist gemäß dem erfindungsgemäßen Verfahren.

Weiterhin wird ein Verfahren zur Herstellung einer Produktverpackung beschrieben, sowie eine Produktverpackung eine erfindungsgemäße mehrschichtige Verpackungsfolie aufweisend.

### Kurze Beschreibung der Abbildungen

Figur 1 zeigt einen Querschnitt einer erfindungsgemäßen Verpackungsfolie.
Figur 2 zeigt ein erfindungsgemäßes Herstellungsverfahren der erfindungsgemäßen mehrschichtigen Verpackungsfolie.
Figur 3 zeigt eine erfindungsgemäße Verpackungsmulde mit Deckelfolie, wobei die Mulde aus einer erfindungsgemäßen mehrschichtigen Verpackungsfolie hergestellt ist.

### Ausführliche Beschreibung der Erfindung

Die vorliegende Erfindung richtet sich in einem ersten Aspekt zur Herstellung einer mehrschichtigen Verpackungsfolie, umfassend
a) Bereitstellen einer Papierschicht als eine Oberfläche der mehrschichtigen Verpackungsfolie und
b) Bereitstellen einer mehrlagigen Heißsiegelschicht mit einer auf einer Oberflächenseite vorliegenden Kaschierschicht;
c) Thermokaschieren der Papierschicht und der mehrlagigen Heißsiegelschicht, wobei die Kaschierschicht der mehrlagigen Heißsiegelschicht auf der die Oberfläche der mehrlagigen Verpackungsfolie gegenüberliegenden Oberfläche der Papierschicht angeordnet wird und anschließend unter Druck und Erwärmung kaschiert werden, wobei die Kaschierschicht der mehrlagigen Heißsiegelschicht eine ist aus modifizierten Polyolefin oder aus Polyolefin Copolymer.

Insbesondere ist die Kaschierung eine flächige Kaschierung im Vergleich zu punktuellen Kaschierungen. In einer Ausführungsform ist es eine vollflächige Kaschierung. Insbesondere bei Verarbeitung dieser mehrschichtigen Verpackungsfolie durch Tiefziehverfahren ist eine entsprechende flächige Ausbildung notwendig.

In einer Ausführungsform ist dabei mindestens eine der Kaschierwalzen erwärmt.

Die erfindungsgemäße, mehrschichtige Verpackungsfolie besteht also zumindest aus einer Papierschicht und der mehrlagigen Heißsiegelfolie. Bei der erfindungsgemäßen Papierschicht handelt es sich um eine, die zumindest aus teilweise nachwachsenden Rohstoffen besteht und entweder ein (ungestrichenes) Rohpapier oder ein gestrichenes Rohpapier sein kann.

Die Papierschicht ist eine, die eine flächige Kaschierung der mehrlagigen Heißsiegelschicht auf diese Papierschicht erlaubt. Üblicherweise weist die Papierschicht eine Dicke von 30µm bis 500µm auf. Insbesondere handelt es sich um eine Papierschicht, die nicht wellig ausgebildet ist. Insbesondere handelt es sich bei der Papierschicht um keine Wellpappe.

Unter dem Ausdruck "Rohpapier" wird ein unbeschichtetes oder oberflächengeleimtes Papier verstanden. Neben Zellstofffasern weist entsprechend das Rohpapier übliche Papierbestandteile, wie Leimungsmittel, Nassfestmittel, Trockenfestmittel, Aufheller und/oder Pigmente, Füllstoffe, Farbstoffe, Entschäumer und weitere in der Papierindustrie bekannte Hilfsmittel auf. Gegebenenfalls kann das Rohpapier oberflächengeleimt sein. Geeignete Leimmittel sind zum Beispiel Polyvinylalkohol oder oxidierte Stärke.

Das Rohpapier kann gemäß bekannter Verfahren hergestellt werden, das Flächengewicht des Rohpapiers beträgt 20 bis 500 g/m², wie 30 bis 200 g/m², zum Beispiel 40 bis 200 g/m².

Das Papier kann auch mehrschichtig eingesetzt werden, wenn das Papier aus mehreren Lagen gebildet wird, ist dieses üblicherweise mit einem Klebstoff verbunden. Einzelne Papierschichten können dabei bis zu 200 g/m² aufweisen. Mehrschichtige Papiere als Papierschicht werden insbesondere dann genommen, wenn Deckelpapierschichten gewünscht sind.

Das Rohpapier kann in unverdichteter oder verdichteter Form eingesetzt werden. Geeignete Dichten des Rohpapiers liegen im Bereich von 0,8 bis 1,2 g/cm³ (wie 0,90 bis 1,10 g/cm³). Als Zellstofffasern können übliche Fasern eingesetzt werden.

Der Zellstoff weist vorzugsweise einen Ligningehalt von weniger als 0,05 Gew.-% auf, wie 0,01 bis 0,03 Gew.-% bezogen auf die Masse des Zellstoffes.

Füllstoffe sind übliche Füllstoffe wie Kaoline, Calciumcarbonat in Form von zum Beispiel Kalkstein, Marmor oder Dolomitstein, gefälltes Calciumcarbonat, Calciumsulfat, Bariumsulfat, Titaniumdioxid, Talkum, Silicia, Aluminiumoxid und deren Gemische, wie sie üblicherweise verwendet werden. Bevorzugt zeigte sich Calciumcarbonat zum Beispiel mit einer Korngrößenverteilung bei der mindestens 60 % der Teilchen kleiner als 2 µm und höchstens 40 % kleiner als 1 µm sind. In einer besonders bevorzugten Ausgestaltung wird Calcit mit einer Korngrößenverteilung eingesetzt, bei der etwa 25 % der Teilchen eine Teilchengröße von weniger als 1 µm und etwa 85 % der Teilchen eine Teilchengröße von weniger als 2 µm aufweisen.

In einer weiteren Ausführungsform ist die Papierschicht eine aus gestrichenem Rohpapier. Bei gestrichenen Rohpapier ist auf mindestens einer Seite des Rohpapiers mindestens eine pigmenthaltige Schicht angeordnet. Übliche Pigmente sind dabei mit einem Metalloxid, Silicat, Carbonat, Sulfide oder Sulfat oder Mischungen hiervon. Als geeignet zeigen sich insbesondere Pigmente wie Kaoline, Talkum, Calciumcarbonat und/oder Bariumsulfat. Die Pigmente weisen dabei bevorzugt eine enge Korngrößenverteilung auf, zum Beispiel sind mindestens 70 % der Pigmentpartikel kleiner als 1 µm. Besonders gute Ergebnisse sind mit einem Anteil des Pigments mit einer Korngrößenverteilung von 30 bis 80 Gew.-% des gesamten Pigments zu erreichen. Unter einem Pigment mit einer engen Korngrößenverteilung wird erfindungsgemäß auch Pigmente mit einer Korngrößenverteilung verstanden, bei der mindestens etwa 70 Gew.-% der Pigmentpartikel eine Größe von kleiner als etwa 1 µm aufweist und bei 40 bis 80 Gew.-% dieser Pigmentpartikel die Differenz zwischen dem Pigmenten mit den größten Korngröße (Durchmesser) und den Pigmenten der kleinsten Korngröße kleiner als etwa 0,4 µm ist. Besonders vorteilhaft zeigten sich Calciumcarbonate mit einem d50%-Wert von etwa 0,7 µm.

Die pigmenthaltige Schicht kann auch Pigmentmischungen aufweisen z. B. aus Calciumcarbonat und Kaolin. Mengenverhältnisse hiervon können im Bereich von 30:70 bis 70:30 liegen. In der pigmenthaltigen Schicht kann jedes bekannte wasserlösliche und/oder wasserdispergierbare Bindemittel eingesetzt werden.

Die Papierschicht basiert im wesentlichen auf nachwachsenden Rohstoffen, wie Zellulose und Zellulosederivaten, und weist vorzugsweise die oben genannten flächigen Gewichte auf. Insofern die erfindungsgemäße Verpackungsfolie zur Herstellung einer einteiligen Verpackung beziehungsweise eines Deckels einer zweiteiligen Verpackung eingesetzt wird, weist die Papierschicht vorzugsweise ein Flächengewicht von 20 g/m² bis 350 g/m² auf. Sofern die erfindungsgemäße mehrschichtige Verpackungsfolie als Behälterfolie, insbesondere zur Herstellung einer tiefgezogenen Verpackungsmulde eingesetzt wird, weist die Papierschicht vorzugsweise ein Flächengewicht von 100 g/m² bis 350 g/m² auf und ist vorzugsweise durch Tiefziehen dauerhaft verformbar.

Die Papierschicht besteht in einer Ausführungsform aus einem ungestrichenen, ggf. nassfest ausgerüsteten Rohpapier die ggf. einmal, zweimal oder bis zu dreimal gestrichen sind. Zur Herstellung der Papierschicht kann auch zumindest teilweise recyceltes Papier eingesetzt werden.

Neben den oben genannten Pigmenten können auch andere Bestandteile in der pigmenthaltigen Schicht vorliegen. So können als Bindemittel Casein verwendet werden. Die oben genannten Pigmente können auch durch Kunststoffbestandteile ersetzt sein, d. h., dass gestrichene Papier ist zum Beispiel eines bei dem die Oberfläche mittels Bindemittelauftrag (der sogenannte Strich) veredelt ist. Als Material für den Bindemittelauftrag wird sogenannte Streichfarbe verwendet, deren Hauptbestandteile Kreide, Kaolin, Casein oder Kunststoffdispersion sein kann.

Die bei gestrichenem Papier erhaltene geschlossenere, glattere und stabilere Oberfläche erlaubt zum Beispiel beim Bedrucken dieser Oberfläche eine hohe Detailwiedergabe und eine bessere Qualität des Drucks. Gestrichene Papiere weisen daher eine bessere Bedruckbarkeit auf. Sie erlauben glattere, homogenere Oberflächen und dem Druckverfahren angepasste Benetzbarkeit. Sie ermöglichen eine verbesserte Tintenaufnahme/Tintenstandvermögen. Die gesamte Opazität ist verbessert. Wenn gewünscht, kann ein Glanzeffekt vorliegen. Das visuelle Erscheinungsbild ist verbessert, das Papier sieht höherwertig aus. Es erhöht darüber hinaus das Flächengewicht und die Dichte des Papiers und kann ggf. besondere gewünschte Eigenschaften dem Papier aneignen, zum Beispiel eine Fett- oder Gas-(Aroma-)dichtigkeit. In der erfindungsgemäßen Verpackungsfolie ist eine Oberflächenschicht eine Papierschicht, insbesondere eine gestrichene Papierschicht.

Als zweite Oberflächenschicht der erfindungsgemäßen Verpackungsfolie liegt eine Kunststofffolie einer mehrlagigen, gegebenenfalls transparenten Heißsiegelschicht vor. Bei einer aus dieser Folie hergestellten Verpackungsfolie ist dabei diese Heißsiegelschicht nach innen gerichtet, also dem zu verpackenden Produkt zugewandt.

Die erfindungsgemäß verwendete mehrlagige Heißsiegelschicht ist eine die eine Kaschierschicht zum Verbinden der Heißsiegelschicht mit der Papierschicht aufweist, die modifiziertes Polyolefin oder modifiziertes Polyolefin-Copolymer ist. In einer Ausführungsform ist dabei das modifizierte Polyolefin- oder Polyolefin-Copolymer ein modifiziertes Polyethylen und/oder Polypropylen. Die Modifizierung kann dabei eine Copolymerisierung des Ethylen und/oder Propylen mit wenigstens einem der folgenden Monomere: Vinylacetat, Alkylacrylat, Alkylmethacrylat, Acrylsäure, Methacrylsäure oder Mischungen hiervon sein. Darüber hinaus können Mischungen dieses Copolymers mit Polyethylen und/oder Polypropylen verwendet werden. Z. B. sind geeignete modifizierte Polyethylen und/oder Polypropylen Ethylen-Vinylacetate Polymer (EVA) und/oder Ethylen-Acrylsäure-Polymer (EAA) enthaltene Copolymere der Polyolefine. In einer Ausführungsform wird eine Mischung von Polyethylen und/oder Polypropylen mit EVA und/oder EAA als Kaschierschicht eingesetzt.

Es zeigte sich, dass die Modifikation dieser Kaschierschicht, die bei bisherigen Heißsiegelschichten im wesentlichen aus Polyethylen und/oder Polypropylen gebildet werden, eine ausreichende Festigkeit bei Herstellung, Verpackung und Gebrauch der Verpackungsfolie aufzeigt. Die Modifikation dieser Kaschierschicht der mehrlagigen Heißsiegelschicht erlaubt aber nach Gebrauch eine einfache Trennung der Kunststoffanteile von den Papieranteilen zum Recyceln dieser Wertstoffe. Entsprechend ist es möglich, die Papierschicht als Papier dem Papierrecycling zuzuführen, während der Kunststoffanteil entsprechend dem Kunststoffrecycling zugeführt werden kann. Das erfindungsgemäße Verfahren und die erfindungsgemäß erhaltene Verpackungsfolie zeichnet sich dadurch aus, dass eine Trennung zwischen Kunststoff- und Papieranteil im wesentlichen rein erfolgt, d. h. es werden keine bei Ablösen des Kunststoffs vom Papier keine großen Papierbestandteile am Kunststoff verbleiben. Lediglich in den Randbereichen können Papierfasern an dem Kunststoff anhaften. Dieses ergibt sich insbesondere auch dadurch, dass die Verpackungsfolie zur Herstellung des Verpackungsprodukts gegebenenfalls noch einmal mit einer entsprechenden Deckfolie oder einem entsprechenden zweiten Abdeckung abgedeckt wird, bei dem üblicherweise eine Versiegelung derart erfolgt, dass eine starke Haftung zwischen Papierschicht und der mehrlagigen Heißsiegelfolie auftreten kann. Dieses geschieht jedoch nur in den Bereichen, in denen die Versiegelung der Verpackungsfolie mit dem zweiten abdeckenden Element erfolgt.

Erfindungsgemäß bleibt der Anteil des zweiten Wertstoffes an dem abgetrennten ersten Werkstoffes, zum Beispiel der Anteil des Papiers an dem Wertstoff Kunststoff sehr gering. Dieser Anteil liegt üblicherweise bei unter 3 %, wie unter 2 %, insbesondere unter 1 % bezogen auf die Gesamtmenge des jeweiligen Wertstoffes.

In einer Ausführungsform des erfindungsgemäßen Verfahrens erfolgt das Thermokaschieren der Papierschicht mit der mehrlagigen Heißsiegelschicht derart, dass die mehrlagige Heißsiegelschicht vor dem Kaschieren vortemperiert wird. In einer Ausführungsform kann dieses Vortemperieren dadurch erfolgen, dass ein Führungselement, wie eine Walze, temperiert ist. Alternativ oder zusätzlich kann das Vortemperieren durch mindestens eine, wie alle Kaschierwalzen erfolgen. Alternative Lösungen zur Erwärmung sind dem Fachmann bekannt, z. B. Wärmestrahlung als elektromagnetische Strahlung, einschließlich Infrarot, Terrahertz oder Mikrowelle. In einer Ausführungsform ist die Kaschierwalze temperiert zum Beispiel auf Temperaturen von ca. 90° C bis 200° C.

Typische Parameter bei der erfindungsgemäßen Thermokaschierung der Papierschicht mit der mehrlagigen Heißsiegelschicht sind Temperaturen von 90 bis 200°C, wie 90°C bis 150°C, z. B. 90°C bis 110°C, üblicherweise erfolgt das Kaschieren unter Druckbeaufschlagung, wie bei einem Druck von 2 bis 8 bar, wie 4 bis 6 bar. Die Geschwindigkeiten der Kaschierung können bei 20 bis 150 m/min, wie 30 bis 70 m/min liegen.

In einer Ausführungsform der vorliegenden Erfindung ist die Kaschierschicht der mehrlagigen Heißsiegelschicht eine, wo die Kaschierschicht aus einem Copolymer aus Ethylen und/oder Propylen und wenigstens einem der folgenden Monomere: Vinylacetat, Alkylacrylat, Alkylmethacrylat, Acrylsäure, Methacrylsäure oder Mischungen davon umfasst oder ein oder mehrere dieser Copolymere mit Polyethylen und/oder Polypropylen vermischt sind.

Dem Fachmann sind geeignete Materialien bekannt genauso wie geeignete Verfahren zur Copolymerisierung dieser. Erfindungsgemäß ist die Kaschierschicht der mehrlagigen Heißsiegelschicht entsprechend ein modifiziertes Polyethylen und/oder Polypropylen der genannten Art.

Wie bereits ausgeführt, erfolgt die Thermokaschierung der mehrlagigen Heißsiegelschicht und der Papierschicht derart, dass die Verbundhaftung zwischen der Kaschierschicht der mehrlagigen Heißsiegelschicht und der Papierschicht ein einfaches Trennen dieser beiden Materialien nach Gebrauch erlaubt. In einer Ausführungsform liegt die Verbundhaftung zwischen der Kaschierschicht und der Papierschicht in einem Bereich von 0,2 bis 3 N/15 mm, wie 0,3 bis 2 N/15 mm, wie 0,4 bis 0,8 N/15 mm, z. B. 0,5 N/15 mm. Die Verbundhaftung wird üblicherweise gemäß der DIN 55543-5 bestimmt.

Im Gegensatz zu üblicher Versiegelung zwischen Verpackungsfolie und Deckfolie bei herkömmlichen Produktverpackungen ist die Verbundhaftung verringert, so dass ein einfaches Lösen und Trennen der beiden Bestandteile möglich ist. So ist die Verbundhaftung zwischen Verpackungsfolie und Deckfolie gemäß dem Stand der Technik üblicherweise im Siegelbereich in einem Bereich von 3 bis 8 N/15 mm, zum Beispiel im Bereich von 4 N/15 mm. Diese Werte werden üblicherweise bei bekannter Klebstoffkaschierung und Extrusionskaschierung erzielt. Das erfindungsgemäße Verfahren mit der beschrieben Thermokaschierung erlaubt hingegen die Verbundhaftung zwischen der Kaschierschicht der mehrlagigen Heißsiegelschicht und der Papierschicht zu verringern.

Wie gesagt, handelt es sich bei der Thermokaschierung um eine bevorzugte flächige, insbesondere vollflächige, Thermokaschierung mit der genannten Verbundhaftung.

Die erfindungsgemäße mehrschichtige Verpackungsfolie weist dabei eine maximale Dicke von bis zu 1 mm auf. In einer Ausführungsform eine maximale Dicke von bis zu 750 µm, insbesondere von bis zu 500 µm, aufweist.

In einem weiteren Aspekt ist das erfindungsgemäße Verfahren eines wobei die Papierschicht eine ist, die ein gestrichenes Papier umfasst, wobei die Oberfläche, die gestrichen ist, eine äußere Oberfläche der mehrschichtigen Verpackungsfolie ausbildet.

In einem weiteren Aspekt ist das Verfahren zur Herstellung einer mehrschichtigen Verpackungsfolie nach einem der vorherigen Ansprüche, wobei die mehrlagige Haftsiegelschicht umfasst eine erste Polyethylen und/oder Polypropylenschicht, einen ersten Haftvermittler, eine Barriereschicht, insbesondere EVOH, einen zweiten Haftvermittler und die Kaschierschicht, wie sie hierin beschrieben ist, in dieser Reihenfolge, insbesondere wobei die erste Polyethylen und/oder Polypropylenschicht die äußere Oberfläche der Verpackungsfolie ausbildet, die der äußeren Oberfläche der Papierschicht gegenüber liegt.

Entsprechende mehrlagige Haftsiegelschichten sind bekannt. So werden mehrlagige Haftsiegelschichten z. B. bei APIT/PE-Unterfolien verwendet und sind aus dem Stand der Technik bekannt. Da die Haftung von EVOH an PE oder PP gering ist, liegt üblicherweise eine Haftvermittlerschicht zwischen EVOH als mittlere Schicht und PE bzw. PP als obere und untere Schicht vor. Die mehrlagige Haftsiegelschicht ist üblicherweise 20 µm bis 100 Am dick, bevorzugt 25 bis 50 µm. In Abhängigkeit von der Dicke der Papiere kann zum Beispiel bei einem Papier mit 200 bis 500 g/m² die Folie dicker sein, während bei dünneren Papieren oder bei Bodenpapieren die Folie dünner ausgebildet ist.

Die Dicken der einzelnen Schichten sind entsprechend den Dicken der bekannten mehrlagigen Heißsiegelschichten. Die Barriereschicht, wie die aus EVOH gebildete Schicht ist üblicherweise minimal 5 µm und maximal 60 µm. Die ober- und unterhalb angeordneten Schichten aus Polyethylen oder Polypropylen sind entsprechend in ihren Schichten angepasst.

Die äußere Oberfläche der mehrlagigen Haftsiegelschicht, üblicherweise ausgebildet aus Polyethylen und/oder Polypropylen, ist geeignet zur Heißversiegelung mit ggf. wiederholbarer Verschließbarkeit zur mehrfachen Entnahme des verpackten Produktes.

Das erfindungsgemäße Verfahren zur Herstellung der mehrschichtigen Verpackungsfolie ist eines, wobei die Papierschicht mit der mehrlagigen Heißsiegelschicht lösbar miteinander verbunden sind, die Papierschicht und die mehrlagige Heißsiegelschicht sind im Wesentlichen vollständig abtrennbar und recycelbar.

Gegebenenfalls umfasst das erfindungsgemäße Verfahren weiterhin den Schritt des Herstellens eines vorbestimmten Bereichs zum Abtrennen der Papierschicht und von der mehrlagigen Heißsiegelschicht. Diese Bereiche können unterschiedlich ausgebildet sein. Die Ausbildung dieses vorbestimmten Bereiches zum Abtrennen der Papierschicht kann z. B. ein Einstanzen oder Einlasern der Papierschicht am Rand oder in der Ecke der Verpackungsfolie und entsprechend der Verpackung sein, wobei eine ebenfalls vorliegende Siegelschicht nicht beschädigt wird.

In einem weiteren Aspekt wird eine mehrschichtige Verpackungsfolie bereitgestellt. Die erfindungsgemäße mehrschichtige Verpackungsfolie ist zum Beispiel mit Hilfe des erfindungsgemäßen Verfahrens erhältlich. Die mehrschichtige Verpackungsfolie ist eine, die eine mehrlagige Heißsiegelschicht aufweist, wobei diese eine ist, wo die Kaschierschicht zum Kaschieren der mehrlagigen Heißsiegelschicht mit der Papierschicht eine ist aus modifiziertem Polyolefin oder Polyolefincopolymer, wie modifiziertem Polyethylen und/oder modifiziertem Polypropylen, wie oben beschrieben.

In einer Ausführungsform ist an die in der erfindungsgemäßen Verpackungsfolie vorliegende Kaschierschicht eine ist aus Polyethylen und/oder Polypropylen odereinem Copolymer aus Ethylen und/oder Propylen und wenigstens einem der folgenden Monomere: Vinylacetat, Acrylacronat, Acrylmiacronat, Acrylsäure, Methylacrylsäure oder Mischungen dieser Monomere hiervon und/oder vermischt mit Polyethylen und/oder Polypropylen. Das heißt, die Kaschierfolie kann aus den entsprechenden Copolymeren bestehen, wobei diese Copolymere ein oder mehrere der genannten Monomere aufweisen kann. Diese Copolymere oder dieses Copolymer kann zusätzlich mit Polyethylen und/oder Polypropylen vermischt sein.

In einer Ausführungsform ist dabei die erfindungsgemäße mehrschichtige Verpackungsfolie in Form eines Beutels, wie ein Schlauchbeutel, eines Deckels, einer Mulde und/oder eines Bodens ausgebildet.

Weiterhin kann die erfindungsgemäße Verpackungsfolie eine sein, die einen am Rand liegenden Teilbereich zwischen der mehrlagigen Haftsiegelschicht und der Papierschicht aufweist, wobei dieser Teilbereich nicht miteinander kaschiert vorliegt, um eine Trennung der beiden Bereiche nach Gebrauch zu erleichtern.

Alternativ kann dieser Teilbereich im Randbereich einen Einschnitt oder einen geschwächten Bereich aufweisen, wie eine Perforation, die das Ablösen der mehrlagigen Heißsiegelschicht von der Papierschicht erleichtert. Alternativ kann zur Verbesserung der Griffigkeit zur Abtrennung ein Einstanzen oder ein Lasern der Papierschicht am Rand oder in der Ecke erfolgen, ohne dass eine ggf. vorliegende Siegelschicht beschädigt wird.

Die erfindungsgemäße Verpackungsfolie erlaubt durch die bessere Trennbarkeit der beiden Schichten, Papierschicht und mehrlagige Heißsiegelschicht, ein verbessertes Recycling dieser Wertstoffe, da die Trennung im Wesentlichen durch die vollständige Lösbarkeit der Heißsiegelfolie von der Papierschicht vollständig erfolgt.

Weiterhin wird erfindungsgemäß ein Verfahren zur Herstellung einer Produktverpackung bereitgestellt. Dieses Verfahren umfasst den Schritt des Versiegelns der Verpackungsfolie nach Einbringen des zu verpackenden Produktes mit einer Deckfolie.

Das erfindungsgemäße Verfahren zur Herstellung der Produktverpackung umfasst in einer Ausführungsform ein Tiefziehen der erfindungsgemäßen Verpackungsfolie. Hierbei ist zwischen einem Tiefziehen und einem thermischen Formen zu unterscheiden. Ein Tiefziehen bedeutet, dass die Verpackungsfolie unter Einwirkung von Druckluft und/oder Vakuum in eine schalenförmige Form gepresst wird und die Folie diese schalenförmige Form beibehält.

Das erfindungsgemäße Verfahren zur Herstellung der Produktverpackung umfasst weiterhin das Einbringen des zu verpackenden Produktes und das anschließende Versiegeln der Produktverpackung enthaltend das zu verpackende Produkt.

Diese erfindungsgemäße Produktverpackung ist insbesondere eine Form einer Schalenverpackung mit einer Mulde aus einer erfindungsgemäßen Verpackungsfolie oder einem Deckel aus der erfindungsgemäßen Verpackungsfolie oder liegt in Form eines Vierrandsiegelbeutels vor.

Bei der erfindungsgemäßen Verpackung handelt es sich insbesondere um eine Schalenverpackung mit einer Mulde, wobei die Mulde durch Tiefziehen hergestellt wird. Die Schalenverpackung mit Mulde weist dabei die erfindungsgemäße Verpackungsfolie mit Papierschicht und mehrlagiger Heißsiegelschicht auf.

Die erfindungsgemäße Verpackungsfolie und die erfindungsgemäße Produktverpackung eignen sich insbesondere für verpackte Lebensmittel. Verpackte Lebensmittel schließen insbesondere ein wenigstens ein Käse, wenigstens eine Wurst, wenigstens ein Schinken, wenigstens ein Fleisch bzw. Fleischteil, wenigstens ein Geflügel bzw. Geflügelteil, wenigstens eine Backware, wenigstens eine Backzutat, wenigstens ein Knabbergebäck, wenigstens ein Snack, Nüsse, Kerne, wenigstens eine Süßware, wenigstens ein Fisch bzw. Fischteil, wenigstens ein festes oder flüssiges Fertiggericht, Streichfette, Mayonnaise, Senf, Ketchup oder ein Gewürz oder Gewürzmischungen. Die erfindungsgemäßen Verpackungsfolien und Produktverpackungen eignen sich aber auch zur Verpackung anderer Produkte, insbesondere solche, die eine Barriereschicht benötigen, wie Produkte, die unter Schutzgas oder einem anderem Gas als Luft verpackt werden, Produkte, die eine bestimmte Luftfeuchtigkeit benötigen etc.

Unter Bezugnahme auf die Abbildungen wird der Erfindungsgegenstand weiter erläutert:

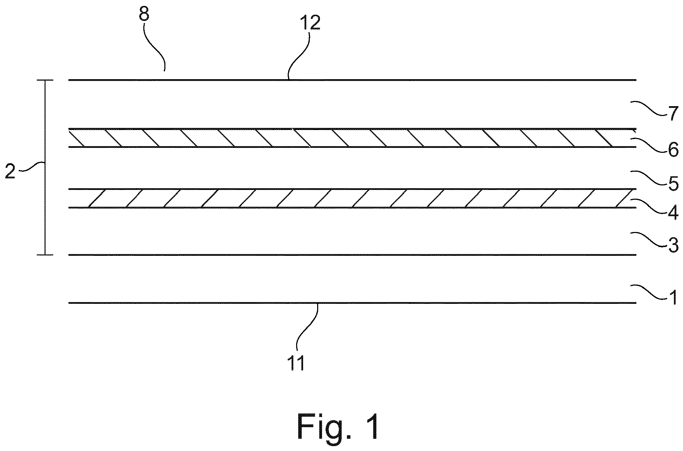

Die Figur 1 zeigt eine erfindungsgemäße Verpackungsfolie 8 mit der Papierschicht 1 mit der äußeren Oberfläche 11 sowie die mehrlagige Heißsiegelschicht 2 mit der Kaschierschicht 3, dem zweiten Haftvermittler 4, der Barriereschicht 5, dem ersten Haftvermittler 6 sowie der ersten Polyethylen- und/oder Polypropylenschicht 7. Diese erste Polyethylen- und/oder Polypropylenschicht 7 bilden dabei die zweite äußere Oberfläche 12 der erfindungsgemäßen Verpackungsfolie 8 aus.

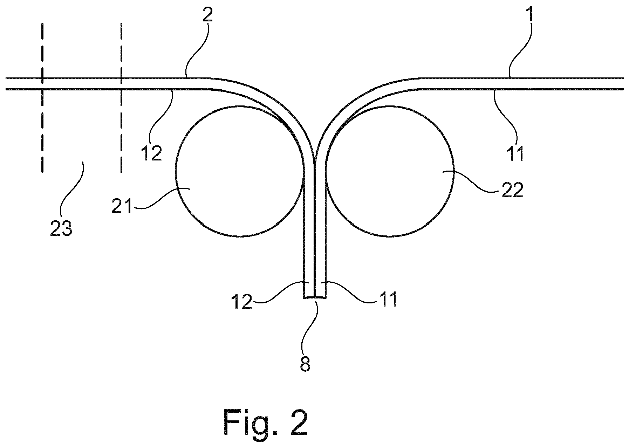

Vorliegend wird die erfindungsgemäße mehrschichtige Verpackungsfolie 8 wie beschreiben hergestellt. Beispielhaft wird in der Figur 2 eine Einrichtung gezeigt, in dem das erfindungsgemäße Verfahren zur Thermokaschierung dargestellt wird.

Die mehrlagige Heißsiegelschicht 2 wird dabei mit der Papierschicht 1 durch die Kaschierwalzen 21 und 22 geführt. Hierbei erfolgt eine Druckbeaufschlagung auf die Schichten ggf. unter Erwärmung durch mindestens eine der Kaschierwalzen 21 und 22. Die Kaschierwalzen 21 und 22 sind erwärmbar ausgebildet. Alternativ können andere Quellen zur Erzeugung von Wärmestrahlung vorhanden sein, wie eine Infrarotheizung, Mikrowellenerzeuger, etc.. Während der Thermokaschierung erfolgt das Kaschieren der Kaschierschicht der mehrlagigen Heizsiegelschicht mit der Papierschicht unter Ausbildung der Verpackungsfolie 8 mit den außen oberliegenden Oberflächen 12 ausgebildet durch die erste Polypropylen und/oder Polyethylenschicht und der äußeren Oberfläche der Papierschicht 11. In einer Ausführungsform ist dabei die Oberfläche der Papierschicht 11 eine gestrichene Schicht, wie oben beschrieben.

Gegebenenfalls wird die mehrlagige Heißsiegelschicht vor in Kontaktbringen mit der Papierschicht in einem Erwärmungsbereich 23 erwärmt. Dieses kann über bekannte Verfahren zum Erwärmen erfolgen, zum Beispiel über Walzen, Führen der Folie durch einen erwärmten Bereich, Infrarotheizung, Mikrowelle, etc..

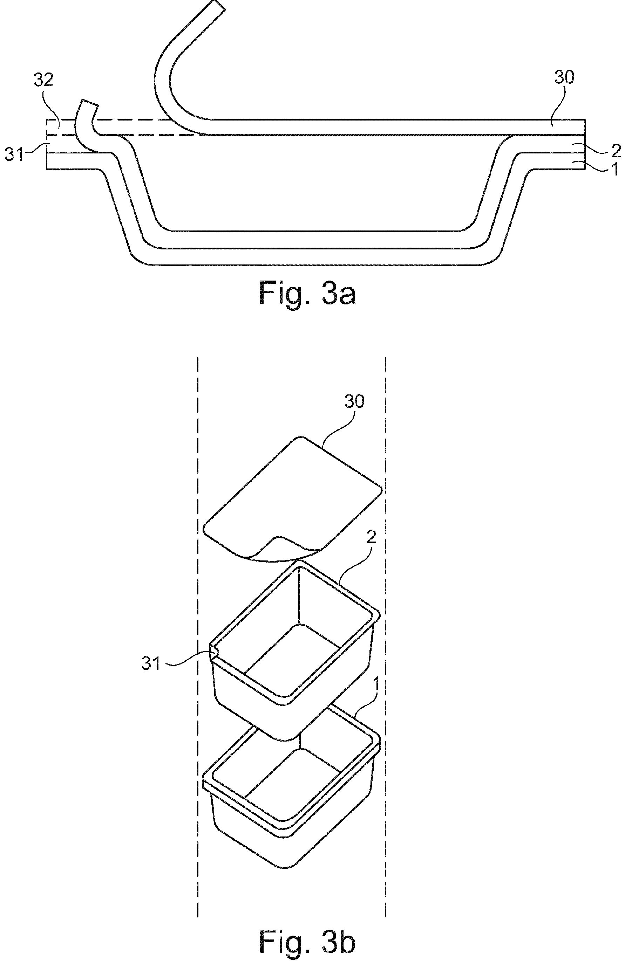

Die Figur 3a zeigt eine erfindungsgemäße Verpackungsmulde mit Deckelfolie, wobei die Mulde hergestellt ist aus einer erfindungsgemäßen mehrschichtigen Verpackungsfolie. Dargestellt sind die Papierschicht 1, die innen liegende mehrlagige Heißsiegelschicht 2 und die Deckelfolie 30. Die mehrlagige Heißsiegelschicht 2 und die Papierschicht 1 sind erfindungsgemäß kaschiert. Die Deckelfolie wurde nach Einbringen der Produkte (nicht dargestellt) in die Mulde aufgebracht und verschließt diese.

Das Verschließen mit der Deckelfolie erfolgt dabei derart, dass der Inhalt entsprechend gegenüber der Umwelt abgeschirmt ist. Gegebenenfalls ist dabei die Haftung zwischen Deckelfolie und mehrlagiger Heißsiegelfolie im Bereich 32 wiederverschließbar ausgebildet. Darüber hinaus weist eine erfindungsgemäße Produktverpackung wie die dargestellte Verpackungsmulde mit Deckelfolie einen Bereich 31 auf, der ein einfaches Greifen und Abtrennen der mehrlagigen Heißsiegelfolie 2 von der Papierschicht 1 erlaubt.

Die Figur 3b zeigt noch einmal die verschiedenen Schichten, die Papierschicht 1, die mehrschichtige Heißsiegelschicht 2 und die Deckelfolie 30 als Explosionszeichnung. Im Bereich 31 ist die einfache Abtrennung der mehrlagigen Heißsiegelschicht von der Papierschicht möglich. Darüber hinaus kann dieser Bereich auch genutzt werden, um ein Greifen der Deckelfolie zum Öffnen der Produktverpackung zu ermöglichen.

### Bezugszeichenliste:

- 1: Papierschicht
- 2: mehrlagige Heißsiegelschicht
- 3: Kaschierschicht
- 4: zweiter Haftvermittler
- 5: Barriereschicht
- 6: erster Haftvermittler
- 7: erste Polypropylen- und/oder Polyethylenschicht
- 8: Verpackungsfolie
- 11: äußere Oberfläche der Papierschicht
- 12: äußere Oberfläche der mehrlagigen Heißsiegelschicht
- 21, 22: Kaschierwalze
- 23: Erwärmungsbereich
- 30: Deckelfolie
- 31: Teilbereich nicht kaschiert zwischen Papierschicht und mehrlagiger Heißsiegelschicht
- 32: Teilbereich zum Trennen der Deckelfolie und der mehrlagigen Heißsiegelschicht

## Patentansprüche

1. Verfahren zur Herstellung einer mehrschichtigen Verpackungsfolie, umfassend
a) Bereitstellen einer Papierschicht als eine Oberfläche der mehrschichtigen Verpackungsfolie und
b) Bereitstellen einer mehrlagigen Heißsiegelschicht mit einer auf einer Oberflächenseite vorliegenden Kaschierschicht;
c) Thermokaschieren der Papierschicht und der mehrlagigen Heißsiegelschicht, wobei die Kaschierschicht der mehrlagigen Heißsiegelschicht auf der die Oberfläche der mehrlagigen Verpackungsfolie gegenüberliegenden Oberfläche der Papierschicht aufeinander gebracht werden und anschließend unter Druck und Erwärmung insbesondere flächig kaschiert werden, gegebenenfalls wobei mindestens eine der Kaschierwalzen erwärmt ist, **dadurch gekennzeichnet, dass** die Kaschierschicht der mehrlagigen Heißsiegelschicht eine ist aus modifizierten Polyolefin- oder Polyolefin Co-polymer.

2. Verfahren zur Herstellung einer mehrschichtigen Verpackungsfolie nach Anspruch 1, **dadurch gekennzeichnet, dass** die mehrlagige Heißsiegelschicht vor dem Kaschieren vortemperiert wird.

3. Verfahren zur Herstellung einer mehrschichtigen Verpackungsfolie nach Anspruch 1 oder 2, **dadurch gekennzeichnet, dass** die Kaschierschicht der Folie eine ist aus Polyethylen und/oder Polypropylen oder ein Co-Polymer mit Ethylen und/oder Propylen oder Mischungen hiervon.

4. Verfahren zur Herstellung einer mehrschichtigen Verpackungsfolie nach Anspruch 1 oder 3, **dadurch gekennzeichnet, dass** die Kaschierschicht der Folie eine ist aus einem Polyolefin, wie Polyethylen und/oder Polypropylen oder einem Co-Polymer aus Ethylen und/oder Propylen und wenigstens einen der folgenden Monomere:
Vinylacetat, Alkylacrylat, Alkylmethacrylat, Acrylsäure, Methacrylsäure oder Mischungen hiervon, oder Mischungen eines oder mehrerer dieser Co-Polymere mit Polyethylen und/oder Polyprophylen.

5. Verfahren nach einem der vorherigen Ansprüche zur Herstellung einer mehrschichtigen Verpackungsfolie, wobei die Thermokaschierung bei einer Temperatur von 90 bis 200° C erfolgt und/oder bei einem Druck von 2 - 8 bar und/oder bei einer Geschwindigkeit von 20 - 150 m/min.

6. Verfahren nach einem der vorherigen Ansprüche zur Herstellung einer mehrschichtigen Verpackungsfolie, wobei die insbesondere flächige, wie vollflächige Verbundhaftung zwischen Kaschierschicht und Papier in einem Bereich von 0,2 bis 8 N/15 mm liegt und/oder die Verpackungsfolie eine maximale Dicke von bis zu 1 mm, wie 750 µm, insbesondere 500 µm aufweist..

7. Verfahren zur Herstellung einer mehrschichtigen Verpackungsfolie nach einem der vorherigen Ansprüche, wobei die Papierschicht eine ist, die ein gestrichenes Papier umfasst, wobei die Oberfläche, die gestrichen ist, eine äußere Oberfläche der mehrschichtigen Verpackungsfolie ausbildet.

8. Verfahren zur Herstellung einer mehrschichtigen Verpackungsfolie nach einem der vorherigen Ansprüche, wobei die mehrlagige Haftsiegelschicht umfasst eine erste Polyethylen und/oder Polypropylenschicht, einen ersten Haftvermittler, eine Barriereschicht, insbesondere EVOH, einen zweiten Haftvermittler und die Kaschierschicht in dieser Reihenfolge, insbesondere wobei die erste Polyethylen und/oder Polypropylenschicht die äußere Oberfläche der Verpackungsfolie ausbildet, die der äußeren Oberfläche der Papierschicht gegenüber liegt.

9. Verfahren zur Herstellung einer mehrschichtigen Verpackungsfolie nach einem der vorherigen Ansprüche, wobei die Papierschicht und die mehrlagige Heißsiegelschicht, insbesondere flächig, lösbar miteinander verbunden sind, derart, dass die Papierschicht und die mehrlagige Heißsiegelschicht im Wesentlichen vollständig abtrennbar und recycelbar sind.

10. Mehrschichtige Verpackungsfolie mit einer Kaschierschicht wie in einem der vorherigen Ansprüche definiert oder erhältlich nach einem der Ansprüche 1 bis 8, insbesondere wobei diese in Form eines Beutels, einer Fläche, eines Deckels, einer Mulde und/oder eines Bodens ausgebildet ist.

11. Verfahren zur Herstellung einer Produktverpackung, umfassend den Schritt des Versiegelns der Verpackungsfolie nach Einbringen des zu verpackenden Produktes mit einer Deckfolie, insbesondere umfassend ein Tiefziehen der Verpackungsfolie nach Anspruch 10 oder 11.

12. Produktverpackung erhältlich nach Anspruch 11 oder aufweisend eine Verpackungsfolie nach Anspruch 10.

13. Produktverpackung nach Anspruch 12, wobei diese in Form einer insbesondere tiefgezogenen Schalenverpackung mit einer Mulde aus einer Verpackungsfolie nach Anspruch 10 und einem Deckel, in Form eines Vierrandsiegelbeutels, als Schlauchbeutel oder als Deckel einer Mulde oder Schale vorliegt.

14. Verpackungsfolie oder Produktverpackung nach einem der Ansprüche 10, 12 oder 13, wobei ein am Rand liegender Teilbereich zwischen der Siegelschicht und der Papierschicht nicht miteinander kaschiert vorliegt, um eine Trennung der beiden Bereiche nach Gebrauch zu erleichtern.

15. Recycelbare Verpackungsfolie oder Produktverpackung nach einem der Ansprüche 12, 13 oder 14, wobei die Heißsiegelfolie im Wesentlichen vollständig lösbar mit der Papierschicht insbesondere flächig verbunden ist.
